Europäisches Patentamt

European Patent Office

Office européen des brevets

(11) Veröffentlichungsnummer : **0 157 121**
**B1**

(12) EUROPÄISCHE PATENTSCHRIFT

(45) Veröffentlichungstag der Patentschrift :
30.11.88

(51) Int. Cl.⁴ : **A 61 C   5/06**

(21) Anmeldenummer : 85101251.8

(22) Anmeldetag : 06.02.85

(54) Behälter zum Ausbringen von Dentalmassen.

(30) Priorität : 01.03.84 DE 3407648

(43) Veröffentlichungstag der Anmeldung :
09.10.85 Patentblatt 85/41

(45) Bekanntmachung des Hinweises auf die Patenterteilung : 30.11.88 Patentblatt 88/48

(84) Benannte Vertragsstaaten :
AT BE CH DE FR GB IT LI LU NL SE

(56) Entgegenhaltungen :
EP-A- 0 063 891
CH-A-   253 614
DE-A-   628 404
DE-A- 2 324 296
GB-A-   428 229
GB-A- 2 005 553
US-A- 2 701 668
US-A- 2 727 658

(73) Patentinhaber : ESPE Stiftung & Co Produktions- und
Vertriebs KG
D-8031 Seefeld (DE)

(72) Erfinder : Herold, Wolf-Dietrich
Höhenweg 13
D-8031 Seefeld 2 (DE)

(74) Vertreter : Strehl, Schübel-Hopf, Groening, Schulz
Widenmayerstrasse 17 Postfach 22 03 45
D-8000 München 22 (DE)

## Beschreibung

Die Erfindung bezieht sich auf den Dentalbereich und betrifft einen Behälter der im Oberbegriff des Patentanspruchs 1 angegebenen Gattung zum Herstellen und/oder Ausbringen von Dentalmassen.

Derartige Behälter werden insbesondere zur Herstellung von Dentalpräparaten durch Mischung von zwei oder mehreren miteinander reagierenden Substanzen und zum Ausbringen des fertigen Präparats direkt an die zu behandelnde Stelle, etwa in eine Zahnkavität, eingesetzt.

Ein Behälter der eingangs bezeichneten Gattung ist aus der DE-B-2 324 296 bekannt. Dieser Behälter wird vom Hersteller im gefüllten Zustand an den Verbraucher, etwa den Zahnarzt, geliefert, wobei eine der beiden miteinander zu vermischenden Komponenten, bei der es sich um eine pulverförmige Substanz handelt, in die Mischkammer und die andere, flüssige Komponente in ein Folienkissen eingefüllt ist, das unter einer seitlich an der Mischkammer angeordneten Spange untergebracht ist.

Bei der Anwendung wird die Spange quer zur Längsachse der Mischkammer gedrückt, so daß das Folienkissen zerreißt und seinen Inhalt durch eine in der Mischkammerwand vorgesehene Öffnung in das Innere der Mischkammer entleert. Sodann wird der Behälter mittels eines Schüttlers in rasche Hin- und Herbewegungen versetzt, um die beiden Komponenten durch Vermischung zur Reaktion zu bringen. Anschließend wird das fertig gemischte und damit gebrauchsfähige Dentalpräparat durch Verschieben eines Kolbens in Längsrichtung der Mischkammer durch eine am vorderen Ende der Mischkammer angeformte Düse direkt an der Behandlungsstelle ausgebracht, nachdem ein den Behälter während Transport, Lagerung und Mischung verschließender Stift nach vorne aus der Düse herausgezogen worden ist.

Bei dem bekannten Behälter verläuft die Düse in Längsrichtung der Mischkammer. Da diese Stellung für das direkte Einbringen in eine Zahnkavität selten günstig ist, hat sich herausgestellt, daß in der Praxis die Helferin vor der Anwendung durch den Zahnarzt die Düse in jedem Fall abbiegt, selbst wenn dies von der Anwendung her eigentlich nicht erforderlich wäre. Dabei wird das Material der Düsenwandung stark überdehnt, was gelegentlich sogar zu einem Abreißen führt.

Das Abbiegen verursacht eine Querschnittsverengung der Düse, die eine Materialentmischung bewirkt, die darauf zurückzuführen ist, daß sich größere Materialpartikel vor dem Engpaß stauen und zunächst dünner-flüssige Bestandteile hindurchgedrückt werden. Derartige Mischungen, die nicht das korrekte Mischungsverhältnis aufweisen, können unbrauchbar sein und den Erfolg der zahnärztlichen Behandlung gefährden. Gelegentlich ist die Hemmung so groß, daß es zu einer vollständigen Blockierung des Behälters kommt. Gemäß der DE-A-2 741 184 hat man versucht, die oben dargelegte, auch dort bereits erkannte Schwierigkeit dadurch zu meistern, daß mindestens die an die Mischkammer angeformte Ausbringdüse biegbar gestaltet ist und während des Mischvorgangs von einer starren, zweiteiligen Schutzhülle umgeben wird. Abgesehen davon, daß die zweiteilige Schutzhülle eine unerwünschte Erhöhung der zu fertigenden und bei der Anwendung zu handhabenden Einzelteile darstellt, ist ihre Verwendung bei einigen üblichen Schüttlern aufgrund der Konstruktion von deren Mischgabel nicht möglich. Ferner ist es bei dem bekannten Behälter schwierig, die Mischkammer selbst mit genügender Steifigkeit auszubilden, so daß sie den Druck beim Ausbringen der fertigen Substanz mit Hilfe des Kolbens aushält, gleichzeitig jedoch die an die Mischkammer angeformte Ausbringdüse genügend flexibel zu machen, so daß die beschriebene Querschnittsverengung beim Abbiegen vermieden wird.

Aus der EP-A-63 891 ist ferner ein Misch- und Ausbringbehälter für Dentalpräparate bekannt, bei dem die Ausbringdüse unter einem Winkel zur Längsachse der Mischkammer an diese angeformt ist. Diese Stellung der Düse mag zwar für eine Reihe von Anwendungsfällen günstiger sein als die üblicherweise in Längsrichtung der Mischkammer verlaufende Düse, doch besteht auch hier die Gefahr, daß die Düse abgebogen wird, um sie in die jeweils am besten geeignete Stellung zu bringen. Im übrigen läßt sich auch dieser Behälter wegen der schräg nach vorne verlaufenden starren Düse in einer Reihe von üblichen Schüttlern nicht einsetzen.

Das gleiche Problem besteht bei dem eingangs erwähnten Behälter, bei dem die Düse in Axialrichtung an der Kammer ansetzt, sofern die Aufnahmegabel des Schüttlers kein Loch aufweist. Abgesehen davon ist jede gerade oder schräg nach vorne ragende Düse nachteilig, weil sie die Gesamtlänge des Behälters wesentlich erhöht und daher bei solchen Schüttlergeräten nicht einsetzbar ist, deren Schüttelmechanismus von einer die Aufnahmegabel verhältnismäßig eng umgebenden Abdeckhaube geschützt ist.

Bei Behältern wie dem eingangs beschriebenen, bei denen die Düse bis zum Zeitpunkt des Ausbringens durch einen Stift verschlossen ist, besteht ferner das Problem, daß zwar zum sicheren und bequemen Ausbringen die Düse über ihre Länge leicht konisch und im Eingangsbereich trichterförmig sein sollte, dadurch jedoch Toträume gegenüber dem zylindrischen Stift und der Düsenwandung entstehen, in denen sich die pulverförmige Komponente während der Lagerung festsetzt und anschließend nicht am Mischprozeß teilnimmt. Man hat beobachtet, daß dieses unvermischte Material beim Ausbringen auf dem Strang sitzt, so daß es, falls es nicht entfernt wird, als erstes in die Zahnkavität gelangt und dort nicht ordnungsgemäß aushärtet.

Der Erfindung liegt die generelle Aufgabe zugrunde, Nachteile, wie sie beim Stand der Technik bestehen, mindestens teilweise zu beseitigen. Eine speziellere Aufgabe der Erfindung kann darin gesehen werden, einen Behälter der eingangs bezeichneten Gattung anzugeben, der bei einer geringen Anzahl von einzelnen Bauteilen eine Veränderung der Stellung der Ausbringdüse ohne die Gefahr von Querschnittsverengungen gestattet.

Die erfindungsgemäße Lösung dieser Aufgabe ist im Kennzeichenteil des Patentanspruchs 1 angegeben. Die danach vorgesehene Verschwenkbarkeit des die Düse bildenden separaten Röhrchens ermöglicht es, deren Arbeitsstellung in einem vorgegebenen Bereich beliebig einzustellen, gegebenenfalls auch das Röhrchen so zu stellen, daß der Behälter sich in alle üblichen Schüttelgeräte einsetzen läßt, selbst wenn deren Aufnahmegabel kein Loch aufweist. Da der Behälter-Baupteil und das Röhrchen separat hergestellte Bauteile sind, ist es möglich, den Hauptteil aus verhältnismäßig starrem Material mit hoher Maßgenauigkeit herzustellen, wie es unter anderem für das Ausbringen der Masse mittels des Kolbens erforderlich ist, während das Röhrchen verhältnismäßig elastisch und dünnwandig sein kann, was für das Ausbringen in sehr kleine Kavitäten günstig ist.

Die Ausgestaltung der Erfindung nach Patentanspruch 2 ergibt einen besonders brauchbaren Arbeitsstellungsbereich.

Nach der Weiterbildung der Erfindung entsprechend Patentanspruch 3 läßt sich der Bereich, innerhalb dessen die Arbeitsstellung des Röhrchens gewählt werden kann, in für bestimmte Anwendungsfälle günstiger Weise modifizieren.

Bei der Ausgestaltung nach Anspruch 4 wird eine vorteilhafte, Ausbildung des Behälters in der Schließstellung angegeben. Dabei wird insbesondere in der Weiterbildung nach Anspruch 5 eine große und sichere Schließfläche erreicht.

Die Gestaltung der Erfindung nach Patentanspruch 6 resultiert insbesondere dann, wenn der am hinteren Ende des Röhrchens vorgesehene Lagerkörper innerhalb der Kammer gelagert ist, eine Konzeption, die besonders wenig Einzelteile erfordert. Die Gestaltung nach Anspruch 7 ist dagegen vom Gesichtspunkt der sicheren Abdichtung vorteilhaft.

Ein besonders günstiger Schwenkbereich für Schließ- und Arbeitsstellungen wird in der Weiterbildung der Erfindung nach Patentanspruch 8 erzielt.

Die Ausgestaltung der Erfindung nach Patentanspruch 9 resultiert in einer problemlosen Einführung der auszubringenden Masse am hinteren Ende des Röhrchens unabhängig von der jeweiligen Arbeitsstellung.

Die in der Weiterbildung der Erfindung nach Anspruch 10 vorgesehene Raste vermittelt einen fühl- und hörbaren Übergang zwischen der Schließstellung und dem Arbeitsbereich, wobei gleichzeitig vermieden wird, daß das Röhrchen unbeabsichtigt aus der Schließstellung in den Arbeitsbereich oder umgekehrt verschwenkt wird. Besonders vorteilhaft ist dabei die Ausgestaltung nach Patentanspruch 11, die positiv verhindert, daß das Röhrchen über seinen Arbeitsbereich hinaus in Richtung der Schließstellung verschwenkt wird, was sonst wiederum zu einer Querschnittsverengung beim Ausbringvorgang führen könnte. Dabei können die Raste und/oder der Anschlag gemäß den Ansprüchen 12 und 13 unterschiedlich gestaltet sein, wobei die Variante nach Anspruch 12 insofern eine Montagehilfe bedeutet, als das Röhrchen in der Kappe beim Aufsetzen der Kappe auf den Behälter-Hauptteil gehalten wird.

Bevorzugte Ausführungsbeispiele der Erfindung werden nachstehend anhand der Zeichnungen näher erläutert. In den Zeichnungen zeigen

Fig. 1 eine im wesentlichen als Längsschnitt ausgeführte Darstellung eines Behälters im zusammengesetzten Zustand,

Fig. 2 eine Draufsicht auf die Kappe des Behälters nach Fig. 1,

Fig. 3 eine der Fig. 1 ähnliche Schnittdarstellung durch die Kappe nach Fig. 2 allein,

Fig. 4 einen Querschnitt durch das Röhrchen knapp oberhalb des an ihm angeformten Lagerkörpers,

Fig. 5 ein anderes Ausführungsbeispiel eines Behälters in einer Fig. 1 ähnlichen Schnittdarstellung, und

Fig. 6 ein weiteres Ausführungsbeispiel des Behälters, wiederum in ähnlicher Darstellung wie Fig. 1.

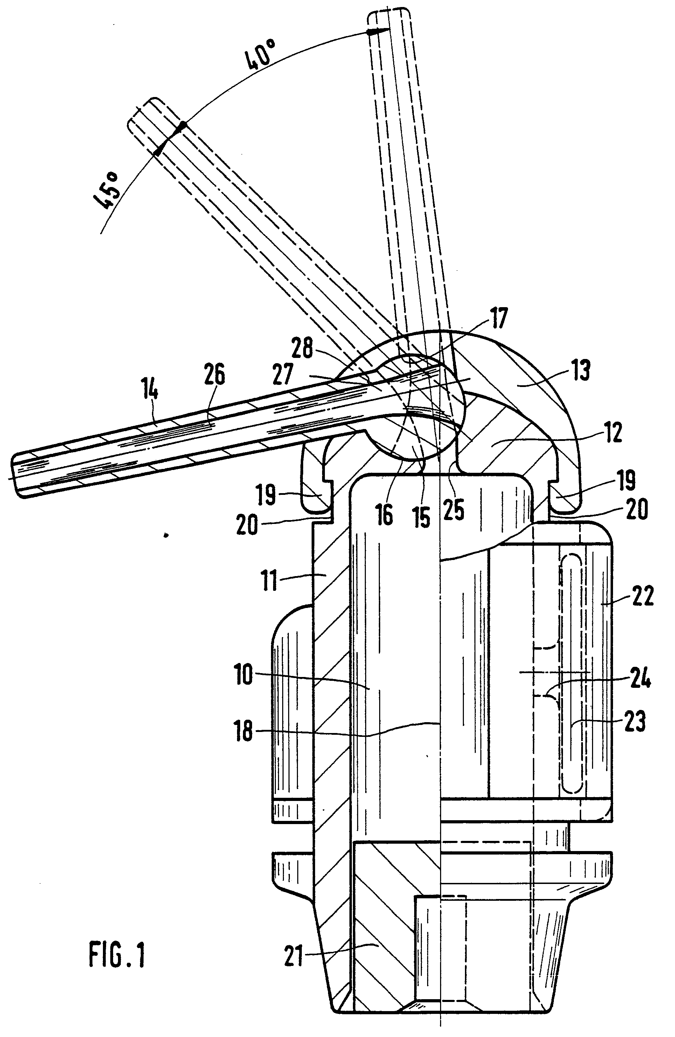

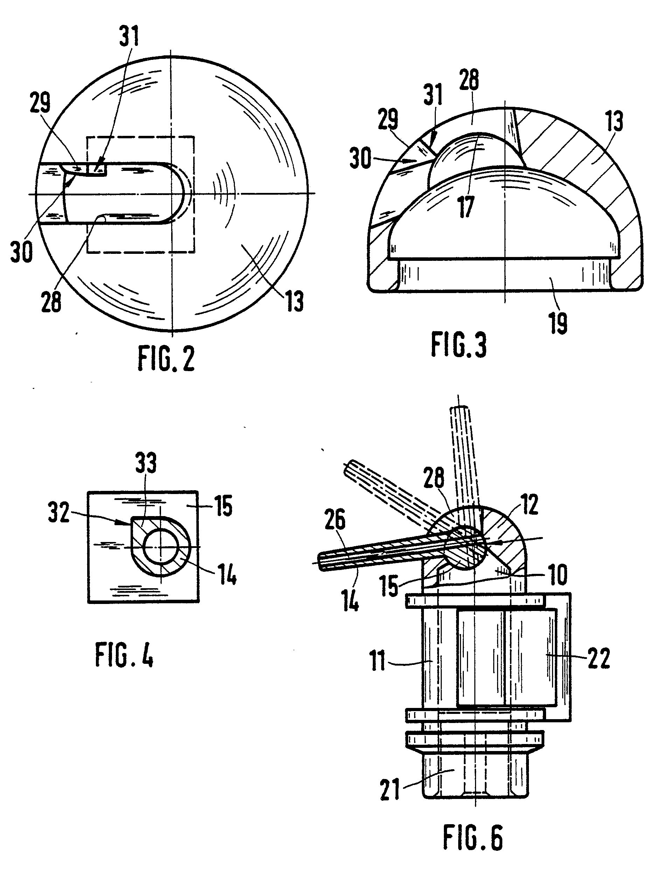

Der in Fig. 1 gezeigte Behälter weist einen eine Mischkammer 10 bildenden Behälter-Hauptteil 11 mit einer vorderen Stirnwand 12 auf, die von einer Kappe 13 übergriffen wird. Ein sich nach vorne leicht konisch verjügendes Ausbring-Röhrchen 14 ist mit seinem hinteren Ende an einen zylindrischen Lagerkörper 15 angeformt, der von einer an der Außenseite der Stirnwand 12 des Behälter-Hauptteils 11 ausgeformten Lagerschale 16 und einer an der Innenseite der Kappe 13 ausgeformten Gegen-Lagerschale 17 (vergleiche auch Fig. 3) gehalten und um seine zur Längsachse 18 der Mischkammer 10 senkrechte Schwenkachse drehbar gelagert ist. Die Kappe 13 weist an ihrem unteren Rand einen nach innen ragenden Flansch 19 auf, der federnd in eine am Hauptteil 11 vorgesehene Ringnut 20 eingreift.

Die Mischkammer 10 wird an ihrem hinteren Ende durch einen Kolben 21 abgeschlossen, der zum Ausbringen der in der Mischkammer 10 fertiggestellten Masse in Richtung der Längsachse 18 nach vorne verschiebbar ist.

Eine die Mantelwand des Hauptteils 11 etwa zur Hälfte umgreifende Spange 22 wird durch am Hauptteil angeformte (nicht gezeigte) Rasten gehalten und enthält ein Folienkissen 23, das ein in der Mantelwand des Hauptteils 11 vorhandenes Loch 24 abdeckt. Nähere Einzelheiten des Aufbaus und der Halterung der Spange und des Folienkissens sind in der DE-B- 2 324 296 beschrieben.

In Fig. 1 ist das Röhrchen 14 in ausgezogenen Linien in seiner Ruhestellung gezeigt, in der der Lagerkörper 15 eine in der Stirnwand 12 vorgesehene Bohrung 25 verschließt. Mit gestrichelten Linien sind in Fig. 1 zwei verschiedene, und zwar die beiden extremen, Arbeitsstellungen des Röhrchens 14 veranschaulicht, die dadurch definiert sind, daß jeweils eine Innenwand einer in dem Lagerkörper 15 ausgebildeten, in die Bohrung 26 des Röhrchens 14 übergehenden, und sich nach hinten trichterförmig erweitenden Durchführung 27 mit einer entsprechenden Wand der Bohrung 25 in der Stirnwand 12 fluchtet. Wie in Fig. 1 angedeutet, liegt zwischen diesen beiden extremen Arbeitsstellungen ein Schwenkwinkel von etwa 40°, wobei das Röhrchen in der einen Arbeitsstellung nahezu in Richtung der Längsachse 18, in der anderen Stellung unter einem Winkel von etwa 45° gegenüber der Längsachse 18 verläuft. In seiner Ruhestellung ist das Röhrchen 14 über einen Winkel von 90° zur Längsachse 18 hinaus etwas nach unten verschwenkt. Der Arbeitsbereich und die Ruhestellung lassen sich unter anderem durch das Maß der Exzentrizitäten, mit denen der Lagerkörper 15 gegenüber dem Behälter-Hauptteil 11 bzw. das Röhrchen 14 gegenüber dem Lagerkörper 15 angeordnet ist, und durch die Querschnittsabmessungen der Bohrung 25 in der Stirnwand 12 sowie des trichterartig erweiterten inneren Endes der Durchführung 27 in dem Lagerkörper 15 beeinflussen.

Das Röhrchen 14 verläuft durch einen in der Kappe 13 vorgesehenen radialen Schlitz 28, an dessen einer Seitenwand eine nach innen vorspringende Raste 29 angeformt ist. Wie aus Fig. 2 und 3 ersichtlich, weist diese Raste 29 eine von außen zur Kappenmitte hin kontinuierlich ansteigende Fläche 30 auf, die in einer zu Innenfläche des Schlitzes 28 senkrechten und zur Schwenkachse des Lagerkörpers 15 radial verlaufenden Anschlagfläche 31 abbricht. Die Anschlagfläche 31 arbeitet mit einer Gegenfläche 32 zusammen, die gemäß Fig. 4 von einer an dem Röhrchen 14 unmittelbar außerhalb des Lagerkörpers 15 vorgesehenen Anformung 33 gebildet wird.

Befindet sich das Röhrchen 14 in der in Fig. 1 mit ausgezogenen Linien gezeigten Ruhe- und Schließstellung, so liegt sein an den Lagerkörper 15 angrenzender hinterster Teil in demjenigen Bereich des Schlitzes 28, der gemäß Fig. 3 von der unteren Schlitzbegrenzung und dem Ende der Fläche 30 definiert wird. Beim Verschwenken in den Arbeitsbereich muß das Röhrchen 14 die Raste 29 überwinden, wobei zunächst ein der Gegenfläche 32 (Fig. 4) gegenüberliegender Teil der Röhrchen-Außenwand mit der kontinuierlich ansteigenden Fläche 30 der Raste 29 in Eingriff tritt. Die am weitesten gegenüber der Längsachse 18 verschwenkte Arbeitsstellung ist dann erreicht, wenn die Raste überwunden ist, was nicht nur fühlbar ist, sondern auch durch ein leichtes Knackgeräusch festgestellt werden kann. Im gesamten Arbeitsbereich ist das Röhrchen frei beweglich, wobei die Lagerreibung des Lagerkörpers so bemessen ist, daß das Röhrchen auch beim Ausbringen der Masse in der jeweils vorgegebenen Arbeitsstellung stehen bleibt. Ein Verschwenken des Röhrchens aus dem Arbeitsbereich in Richtung der Schließstellung wird jedoch durch das Zusammenwirken der an der Raste 29 vorgesehenen Anschlagfläche 31 mit der am Röhrchen 14 vorgesehenen Gegenfläche 32 verhindert. Dadurch ist sichergestellt, daß das Röhrchen nicht versehentlich in eine Ausbringstellung gebracht wird, in der der Durchtritts-Querschnitt zwischen der Bohrung 25 in der Stirnwand 12 und der Durchführung 27 in dem Lagerkörper 15 verengt ist und die einleitend beschriebene Entmischung eintreten könnte.

Der Benutzer erhält den in Fig. 1 gezeigten Behälter vom Hersteller mit zwei Komponenten eines Dentalpräparates gefüllt, wobei die eine Komponente als pulverförmige Substanz in der Mischkammer 10 und die andere als flüssige Substanz in dem Folienkissen 23 vorliegt. Das Röhrchen 14 befindet sich in der Schließstellung.

Zur Fertigstellung des Präparats wird zunächst die Spange 22 senkrecht zur Längsachse 18 der Mischkammer 10 eingedrückt, um das Folienkissen 23 zu zerstören und die flüssige Substanz durch das Loch 24 in die Mischkammer 10 zu überführen. Der Behälter wird sodann in einen Schüttler eingespannt, der üblicherweise eine gabelförmige Aufnahme aufweist, wobei die beiden Gabelteile an der Stirnseite der Kappe 13 und an der hinteren Seite des Behälter-Hauptteils 11 und des Kolbens 21 angreifen. In der Ruhestellung behindert das Röhrchen 14 ein solches Einspannen in keiner Weise.

Nach der Entnahme des Behälters aus dem Schüttler ist das Gemisch (z. B. eine Paste) gebrauchsfertig. Sodann kanndas-Röhrchen 14 in den Arbeitsbereich geschwenkt werden, in der die Bohrung 26 des Röhrchens 14 über die Durchführung 27 in dem Lagerkörper 15 und die Bohrung 25 in der Stirnwand 12 mit der Mischkammer 10 in Verbindung steht. Das Röhrchen 14 wird in die jeweils zweckmäßigste Arbeitsstellung verschwenkt und der Behälter in dieser Stellung in ein Ausbringwerkzeug eingelegt, mit dessen Hilfe der Kolben 21 zum Ausbringen des fertigen Präparates nach vorne verschoben wird. Da das Röhrchen 14 im Gegensatz zu der vorzugsweise aus verhältnismäßig starrem Kunststoff bestehenden Behälter-Hauptteil 11 aus elastischem Kunststoff besteht und dünnwandig ausgeführt ist, läßt sich das Präparat auch in kleine Zahnkavitäten unmittelbar einbringen.

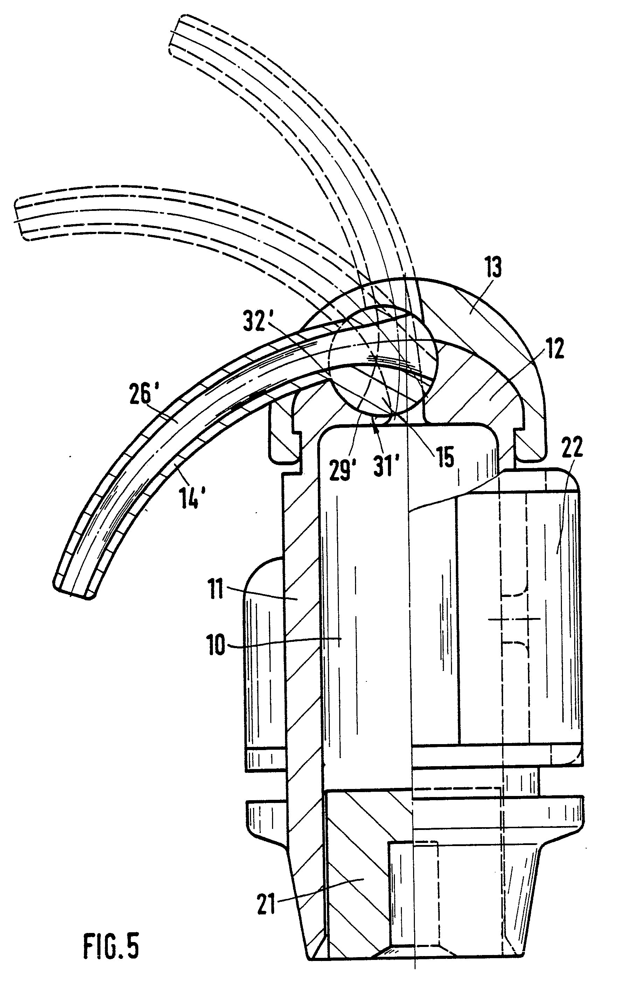

Die in Fig. 5 gezeigte Variante unterscheidet sich von dem Ausführungsbeispiel nach Fig. 1 dadurch, daß das Röhrchen 14' in seiner zur Schwenkachse des Lagerkörpers 15 senkrechten Ebene in Richtung auf die Ruhestellung zu gekrümmt ist. Dadurch werden bei sonst unveränderter Bauart im Arbeitsbereich für bestimmte Anwendungszwecke noch günstigere Stellungen erreicht. Gleichzeitig verringert sich das Maß, um das das Röhrchen 14' in der Ruhestellung seitlich herausragt.

Ein weiterer Unterschied des Ausführungsbeispiels nach Fig. 5 besteht in der Gestaltung der Raste 29', die hier aus einem exzentrischen Vorsprung am Zylindermantel des Lagerkörpers 15 besteht und in der Ruhestellung in eine entsprechend exzentrische Ausnehmung der Stirnwand 12 eingreift. Beim Verschwenken des Röhrchens 14' aus der Ruhestellung in den Arbeitsbereich erzeugt die Raste 29' einen leicht zunehmenden Druck, der plötzlich abnimmt, wenn das Röhrchen 14' seinen Arbeitsbereich gemäß der in Fig. 5 mittleren, gestrichelt gezeigten Stellung erreicht. Ein Rückdrehen aus dieser Stellung wird dadurch verhindert, daß eine radial zur Schwenkachse des Lagerkörpers 15 verlaufende Anschlagfläche 31' der Raste 29' an einer entsprechenden Gegenfläche 32' an der Stirnwand 12 anschlägt.

Das Ausführungsbeispiel nach Fig. 6 unterscheidet sich von dem nach Fig. 1 im wesentlichen darin, daß der Lagerkörper 15 von der Innenseite der Mischkammer 10 her an der Stirnwand 12 anliegt. In diesem Fall erübrigt sich die nach Fig. 1 und 5 vorgesehene Kappe 13.

Die Erfindung wurde vorstehend anhand von Ausführungsbeispielen erläutert, die einen Zweikomponenten-Mischbehälter betreffen, wobei eine der beiden Komponenten in einer seitlich des Behälter-Hauptteils angeordneten Kammer untergebracht ist. Die Erfindung ist ebenso gut auch bei anderen Mischbehälter-Ausführungen für Zwei- oder Mehrkomponenten-Präparate anwendbar.

Ferner ist dargelegt worden, daß das Röhrchen zwischen einer Schließstellung und einem Arbeitsbereich sowie auch innerhalb des Arbeitsbereichs verschwenkbar ist.

## Patentansprüche

1. Behälter zum Mischen und Ausbringen von Dentalmassen mit einem eine Kammer (10) bildenden Hauptteil (11), der einen die Kammer nach hinten begrenzenden, axial verschiebbaren Kolben (21) enthält und an seinem vorderen Ende eine Ausbring-Düse (14) aufweist, die nur vor dem einmaligen Ausbringen des Behälterinhalts verschlossen ist, dadurch gekennzeichnet, daß die Düse von einem separaten Röhrchen (14) gebildet ist, das um eine quer zur Längsachse (18) der Kammer (10) stehende Schwenkachse von einer Schließstellung, in der das Röhrchen (14) quer zur Längsachse (18) verläuft, zu einem außerhalb der Schließstellung gelegenen Arbeitsbereich, innerhalb dessen die Bohrung (26) des Röhrchens (14) mit der Kammer (10) in Verbindung steht, verschwenkbar an dem Hauptteil (11) gelagert ist.

2. Behälter nach Anspruch 1, dadurch gekennzeichnet, daß der Arbeitsbereich zwischen etwa 0° und etwa 50°, bezogen auf die Längsachse (18) definiert ist.

3. Behälter nach Anspruch 1 oder 2, dadurch gekennzeichnet, daß das Röhrchen (14') gekrümmt ist, vorzugsweise in einer zur Schwenkachse senkrechten Ebene.

4. Behälter nach einem der Ansprüche 1 bis 3, dadurch gekennzeichnet, daß das Röhrchen (14) an seinem hinteren Ende einen um die Schwenk-

kachse drehbaren Lagerkörper (15) trägt, der in der Schließstellung das vordere Ende der Kammer (10) verschließt.

5. Behälter nach Anspruch 4, dadurch gekennzeichnet, daß der Lagerkörper (15) einen kreisförmigen Querschnitt aufweist, dessen Mittelpunkt auf der Schwenkachse liegt, und daß das Röhrchen (14) exzentrisch an dem Lagerkörper (15) ansetzt.

6. Behälter nach Anspruch 4 oder 5, dadurch gekennzeichnet, daß der Lagerkörper (15) in einer in der vorderen Stirnwand (12) des Hauptteils (11) ausgeformten Lagerschale (16) gelagert ist.

7. Behälter nach Anspruch 6, dadurch gekennzeichnet, daß die Lagerschale (16) in der Außenfläche der Stirnwand (12) ausgebildet und der Lagerkörper (15) durch eine diese Stirnwand (12) übergreifende Kappe (13) gehalten ist.

8. Behälter nach Anspruch 6 oder 7, dadurch gekennzeichnet, daß die Lagerschale (16) exzentrisch zur Längsachse (18) der Kammer (10) angeordnet ist.

9. Behälter nach einem der Ansprüche 6 bis 8, dadurch gekennzeichnet, daß der Lagerkörper (15) eine Durchführung (27) aufweist, deren äußeres Ende in die Bohrung (26) des Röhrchens (14) übergeht und deren inneres Ende trichterartig erweitert ist.

10. Behälter nach einem der Ansprüche 1 bis 9, gekennzeichnet durch eine die Schließstellung des Röhrchens (14) gegenüber dem Arbeitsbereich definierende Raste (29).

11. Behälter nach einem der Ansprüche 1 bis 10, gekennzeichnet durch einen ein Verschwenken des Röhrchens (14) aus dem Arbeitsbereich in die Schließstellung verhindernden Anschlag (31, 32).

12. Behälter nach Anspruch 10 oder 11, dadurch gekennzeichnet, daß die Raste (29) und/oder der Anschlag (31, 32) von zusammenwirkenden Anformungen gebildet ist, die seitlich am Röhrchen (14) und in einem in der Kappe (13) vorgesehenen Schlitz (28) zum Durchtritt des Röhrchens (14) angeordnet sind.

13. Behälter nach Anspruch 10 oder 11, dadurch gekennzeichnet, daß die Raste (29') und/oder der Anschlag (31', 32') von zusammenwirkenden Anformungen am Lagerkörper (15) und in der Stirnwand (12) des Hauptteils (11) gebildet sind.

14. Behälter nach einem der Ansprüche 1 bis 13, dadurch gekennzeichnet, daß Hauptteil (11) und Röhrchen (14) aus unterschiedlichen Kunststoffen bestehen.

15. Behälter nach Anspruch 14, dadurch gekennzeichnet, daß sein Hauptteil (11) aus steiferem Kunststoff besteht und das Röhrchen (14) aus elastischerem Kunststoff dünnwandig geformt ist.

## Claims

1. A container for mixing and dispensing dental compositions, comprising a body (11) forming a chamber (10) and containing an axially movable piston (21) confining the chamber at the rear and having a dispensing nozzle (14) at its front end which is closed only prior to the single dispensing of the container contents, characterized in that the nozzle is formed by a separate tube (14) which is mounted on the body (11) for pivotal movement about a pivot axis extending transversely to the longitudinal axis (18) of the chamber (10) from a closing position in which the tube (14) extends transversely to the longitudinal axis (18) to an operating range existing outside the closing position, within which operation range the bore (26) of the tube (14) communicates with the chamber (10).

2. The container of claim 1, characterized in that the operating range is defined between about 0° and about 50° with respect to the longitudinal axis (18).

3. The container of claim 1 or 2, characterized in that the tube (14') is curved, preferably in a plane perpendicular to the pivot axis.

4. The container of any of claims 1 to 3, characterized in that the tube (14) has its rear end mounted to a bearing member (15) which is rotatable about the pivot axis and, in the closing position, closes the front end of the chamber (10).

5. The container of claim 4, characterized in that the bearing member (15) has a circular cross-section the center of which is located on the pivot axis, and that the tube (14) is eccentrically joined to the bearing member (15).

6. The container of claim 4 or 5, characterized in that the bearing member (15) is supported in a bearing shell (16) formed in the front end wall (12) of the body (11).

7. The container of claim 6, characterized in that the bearing shell (16) is formed in the outer surface of the end wall (12) and the bearing member (15) is retained by a cap (13) covering this end wall (12).

8. The container of claim 6 or 7, characterized in that the bearing shell (16) is eccentrically disposed with respect to the longitudinal axis (18) of the chamber (10).

9. The container of any of claims 6 to 8, characterized in that the bearing member (15) has a passage (27) the outer end of which merges into the bore (26) of the tube (14) and the inner end of which is enlarged to form a funnel-shape.

10. The container of any of claims 1 to 9, characterized by a catch (29) defining the closing position of the tube (14) relative to the operating range.

11. The container of any of claims 1 to 10, characterized by an abutment (31, 32) for preventing a pivotal movement of the tube (14) from the operating range to the closing position.

12. The container of claim 10 or 11, characterized in that the catch (29) and/or the abutment (31, 32) are formed by cooperating formations which are disposed laterally on the tube (14) and in a slot (28) provided in the cap (13) through which the tube (14) passes.

13. The container of claim 10 or 11, characterized in that the catch (29') and/or the abutment (31', 32') are formed by co-operating formations on the bearing member (15) and in the end wall (12) of the body (11).

14. The container of any of claims 1 to 13, characterized in that the body (11) and tube (14) are made of different plastics materials.

15. The container of claim 14, characterized in that its body (11) is made of a stiffer plastics material and the tube (14) is formed of a more elastic plastics material to have a thin wall.


**Revendications**

1. Réceptacle pour mélanger et distribuer des pâtes dentaires, comprenant une partie principale (1) formant une chambre (10), cette partie principale contenant un piston mobile en direction axiale et limitant la chambre vers l'arrière, et présentant à son extrémité avant un ajutage de distribution (14) qui n'est fermé qu'avant la première distribution du contenu du réceptacle, caractérisé en ce que l'ajutage est formé par un petit tube séparé (14), qui est monté de façon pivotante sur la partie principale (11) autour d'un axe de pivotement disposé transversalement à l'axe longitudinal (18) de la chambre (10) entre une position de fermeture dans laquelle le petit tube (14) est transversal à l'axe longitudinal (18) et une région de travail disposée en dehors de la position de fermeture, dans laquelle l'alésage (26) du petit tube (14) est en liaison avec la chambre (10).

2. Réceptacle selon la revendication 1, caractérisé en ce que la région de travail est définie entre approximativement 0° et approximativement 50° par rapport à l'axe longitudinal (18).

3. Réceptacle selon la revendication 1 ou 2, caractérisé en ce que le petit tube (14') est cintré, de préférence dans un plan qui est perpendiculaire à l'axe de pivotement.

4. Réceptacle selon l'une quelconque des revendications 1 à 3, caractérisé en ce que le petit tube (14) supporte à son extrémité arrière un élément de montage (15) pouvant tourner autour de l'axe de pivotement, qui ferme l'extrémité avant de la chambre (10) dans la position de fermeture.

5. Réceptacle selon la revendication 4, caractérisé en ce que l'élément de montage (15) présente une section transversale de forme circulaire, dont le centre est situé sur l'axe de pivotement, et en ce que le petit tube (14) est monté excentriquement sur l'élément de montage (15).

6. Réceptacle selon la revendication 4 ou 5, caractérisé en ce que l'élément de montage (15) est monté dans une cuvette de support (16) constituée dans la paroi frontale avant (12) de la partie principale (11).

7. Réceptacle selon la revendication 6, caractérisé en ce que la cuvette de support (16) est constituée dans la surface externe de la paroi frontale (12) et que l'élément de montage (15) est maintenu par un capuchon (13) qui recouvre cette paroi frontale (12).

8. Réceptacle selon la revendication 6 ou 7, caractérisé en ce que la cuvette de support (16) est disposée excentriquement par rapport à l'axe longitudinal (18) de la chambre (10).

9. Réceptacle selon l'une quelconque des revendications 6 à 8, caractérisé en ce que l'élément de montage (15) comprend un passage traversant (27) dont l'extrémité externe se raccorde à l'alésage (26) du petit tube (14) et dont l'extrémité interne va en s'évasant en forme d'entonnoir.

10. Réceptacle selon l'une quelconque des revendications 1 à 9, caractérisé par un cran d'arrêt (29) définissant la position de fermeture du petit tube (14) par rapport à la région de travail.

11. Réceptacle selon l'une quelconque des revendications 1 à 10, caractérisé par une butée (31, 32) empêchant le pivotement du petit tube (14) de la région de travail vers la position de fermeture.

12. Réceptacle selon la revendication 10 ou 11, caractérisé en ce que le cran d'arrêt (29) et/ou la butée (31, 32) sont constitués par des formations coopérantes disposées latéralement sur le petit tube (14) et dans une fente (28) prévue dans le capuchon (13) pour le passage du petit tube (14).

13. Réceptacle selon la revendication 10 ou 11, caractérisé en ce que le cran d'arrêt (29') et/ou la butée (31', 32') sont constitués par des formations coopérantes de l'élément de montage (15) et dans la paroi frontale (12) de la partie principale (11).

14. Réceptacle selon l'une quelconque des revendications 1 à 13, caractérisé en ce que la partie principale (11) et le petit tube (14) sont constitués en des matières plastiques différentes.

15. Réceptacle selon la revendication 14, caractérisé en ce que sa partie principale (11) est constituée en une matière plastique plus rigide et le petit tube (14) est à paroi mince constituée en une matière plastique plus élastique.

FIG.1

FIG. 2

FIG. 3

FIG. 4

FIG. 6

FIG.5